(19) Europäisches Patentamt / European Patent Office / Office européen des brevets

(11) EP 2 958 065 A1

(12) EUROPEAN PATENT APPLICATION

(43) Date of publication:
23.12.2015 Bulletin 2015/52

(51) Int Cl.:
G06Q 10/10 (2012.01)    G06Q 50/00 (2012.01)

(21) Application number: 15173039.7

(22) Date of filing: 21.06.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 20.06.2014 US 201462014909 P
17.12.2014 US 201414572994

(71) Applicant: Atlis Labs Ltd.
6971070 Tel Aviv (IL)

(72) Inventors:
• LEON, Shlomi Daniel
Fort Lee, NJ New Jersey 07024 (US)
• EITAN, Nadav
New York, NY 10016 (US)

(74) Representative: Pearl Cohen Zedek Latzer Baratz UK LLP
The Gridiron Building
One Pancras Square
London N1C 4AG (GB)

(54) **METHOD AND SYSTEM FOR CONSUMER RATING AND ADDRESS BOOK MAINTENANCE**

(57) A system and method for providing a networked address book may comprise, for a plurality of users, associating each user's identification with a respective list of contact identifications. A processor may receive a search query from a first user regarding a business. The processor may, based on the search query, retrieve at least one business contact, wherein the retrieved business contact is relevant to the search query and is in a list of contact identifications associated with a second user. The second user may be in the first user's network, wherein the first user's network comprises user identifications in a list of contact identifications associated with the first user. The retrieved business contacts may further be based on community recommendations or ratings and associated with other users that are outside of the first user's network.

FIG. 1

EP 2 958 065 A1

**Description**

**CROSS REFERENCE TO RELATED APPLICATIONS**

This application claims benefit from prior provisional application serial number 62/014,909, filed on June 20, 2014, incorporated by reference herein in its entirety.

**FIELD OF THE INVENTION**

The invention is directed to providing business or other recommendations and address or contact book applications for mobile devices.

**BACKGROUND**

Address books or contact lists in mobile devices (e.g., mobile telephones, smart phones, tablets, laptops with mobile capability, etc.) may provide mobile device users with a way to keep track of their contacts, by listing contact telephone (phone) numbers and emails. The exchange of contact information may use manual data entry as a common method to exchange contact information. This may require the person on both sides of the exchange to create a new contact in their mobile device's address book, then add telephone ("phone") number, email contact, name, and other information. A prominent vehicle to deliver this type of information may be a physical, e.g., cardboard, business card. Even when business cards are exchanged between people, they must manually enter information from the business card into their mobile device.

Relationships between contacts may be extended to social media networks like Facebook, LinkedIn, and Twitter, where a contact information exchange takes the form of online "connections", "friends", or "followers". However, people on social media networks exchange different types of contact information as compared to direct entries in address books. Address books may contain more personal contact information, such as direct contact info including phone numbers and addresses. This personal contact information may indicate a closer relationship with a user of the mobile device, such as a closer personal contact or business relationship, instead of merely an acquaintance.

Some sites or directories, such as the Yelp or Angies List websites may provide a central listing of recommended business contacts and providing reviews or other information on businesses. However, the people making recommendation are typically unknown to the user, and may of course be fraudulent.

**BRIEF DESCRIPTION OF THE DRAWINGS**

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is a diagram of a system or method for an enhanced address book, according to embodiments of the invention.

Fig. 2 is a flow diagram of a system for a networked address book, according to embodiments of the invention.

Fig. 3 is a flow diagram for syncing a networked address book with a native contacts list, according to embodiments of the invention.

Fig. 4 is a flow diagram of a user signing up as a business, according to embodiments of the invention.

Fig. 5 is a diagram of user interfaces for a networked address book, according to embodiments of the invention.

Fig. 8 is a flowchart of a method, according to embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## SUMMARY

A system or method for providing a networked address book may comprise, for a plurality of users, associating each user's identification with a respective list of contact identifications. A processor may receive a search query from a first user regarding a business. The processor may, based on the search query, retrieve at least one business contact, wherein the retrieved business contact is relevant to the search query and is in a list of contact identifications associated with a second user. The second user may be in the first user's network, wherein the first user's network comprises user identifications in a list of contact identifications associated with the first user. The retrieved business contact may also be associated with a plurality of other users of the networked address book, indicating the strength of recommendations within a community or geographical area, for example.

In one embodiment, business contacts may be categorized by a type of good or service offered by the business contacts. One embodiment may include syncing each user's native contacts list with the directory of business contacts. In one embodiment, the second user is in the first user's network via a social media network. In one embodiment, one or more processors sync each user's native contacts list with the directory of business contacts. In one embodiment, a user's contacts include friends or followers on a social media website, or contacts in the user's native contacts list. One embodiment includes a device in communication with the database and associated with a business contact, wherein the device is configured to allow the business contact to offer promotions to the user identifications associated with the business contact.

## DETAILED DESCRIPTION

In the following description, various aspects of embodiments of the invention will be described. For purposes of explanation, specific configurations and details are set forth in order to provide a thorough understanding of the invention. However, it will also be apparent to one skilled in the art that the invention may be practiced without the specific details presented herein. Furthermore, well known features may be omitted or simplified in order not to obscure the invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

Embodiments of the invention may provide a next-generation or advanced address book and use it for a trusted, local discovery platform where people go to discover, engage and transact with local businesses seamlessly. Embodiments of the invention may further use pre-existing contacts in a user's mobile device to power business recommendations. For business discovery, search results on review sites, such as the Yelp™ site, or search engines, such as the Google™ site, may dominate the space. Yet, despite the sophistication around searches and reviews, the social component to these websites may be lacking or may be less useful than on social media websites, such as the Facebook™ site or the Twitter™ site. Rather than seeing where a user's friends have patronized businesses and what a user's friends would recommend, the results may be algorithmic, general, and somewhat untrustworthy. At the same time, discovering businesses on social media websites may not be effective, because sharing on social media may be mostly related to events or personal information about users, instead of businesses they patronize and recommend. For example, a user on the Facebook network may be inclined to share with friends that they received a promotion at work, but may be less inclined to share who the user prefers to use for dry-clean laundry services. Embodiments of the invention may provide an application (e.g., "app") for determining or identifying businesses in a user's address book. A user of a smart phone or other computing device may store a native or pre-existing list of contacts in an address book stored in a smart phone. The list or set of contacts may include personal and business contacts, e.g., businesses that the user patronizes, but the contacts may be uncategorized or unsorted. An advanced address book or application on the smart phone may be able to extract the business contacts from the user's address book and categorize the user's business contacts based on for example the type of goods or services offered by the business contact, or by other methods. The application may further identify which businesses are preferred by the user. The business contacts of each user may be associated or linked with each user and stored on a server on the web (e.g., connected to the Internet), for example. Based on the business contacts associated with a plurality of users, the advanced address book may be able to recommend business contacts to different users. The networked or advanced address book may display results of recommended business contacts on a mobile device, and provide alerts or notifications from businesses that are likely to be preferred by a user.

Embodiments of the invention may provide a networked address book for a plurality of users. Each user may be identified or associated with a user identification, and each user's identification may be associated with a respective list or set of contact identifications. The user identification may be for example a username, a name, part of a name, or a unique key, or another item of information, and the list or set of contact identifications may be a table or other data structure that refers to the unique key. Alternatively each user may have a profile that includes a simple list or set of contact identifications. Each user profile and associated contacts list may be stored on a mobile device and a remote server or database (or database stored on a server). One or more processors implementing the networked address book may be configured to receive a search query from a first user regarding a business. The processors on a mobile device for example, may be in communication with the server or database and retrieve from the server or data at least one business contact. The retrieved business contact may be relevant to the search query and may also be associated with a second user of the networked address book, by being, for example, in a set or list of contact identifications associated with the second user. The second user may be in the first user's network, where the first user's network includes or is represented by user identifications in a list or set of contact identifications associated with the first user. The first user's network may also include other connections via social media websites or users in a local geographical area.

In other embodiments, a database or server may be configured to store a plurality of user identifications, each user identification associated with one or more business contact identifications. The database may further be configured to store a directory of business contacts based on the associated one or more identifications. A plurality of mobile devices for each of the users may be in communication with the database or server and may each be configured to receive a search query from a user of the mobile device. Each mobile device may be configured to retrieve from the database or server, based on the received search query, a business contact identification from the directory of business contacts. The retrieved business contact identification may be associated with at least one user identification of the stored plurality of user identifications, and the user identification may correspond to a user belonging to the user's contacts.

Embodiments of the invention may incorporate methods and algorithms that are able to maintain the confidentiality of users and personal contacts in their address book, while also taking advantage of the social network or social connections of users in order to recommend businesses to the users that are known within their social network. A user's social network or social connections may be defined or determined by the contacts in a user's address book, friends on the Facebook™ network, followers on the Twitter™ network, or other kinds of connections or follows on other social media platforms. Being "in a users's network" may mean, for example, being in a user's contact list (e.g., on a mobile device), or for example being in a user's friend or connections list on a social media application. A user's network may also include other users which are in a similar geographical area. Some embodiments of the methods and algorithms may cross-reference each user's address book with publicly available information about businesses.

Based on this cross-reference, the contacts in the address book may be categorized based on the type of contact, such as whether the contact is a private, personal contact or is known publicly as a particular type of business (e.g., a lawyer, salon, restaurant, dentist, etc.). The user may decide only to share these categorizations with the cloud and to keep personal contacts hidden. The categorization of contacts in an address book may allow users to maintain the privacy of their personal contacts (such as names and phone numbers) on their own devices and share other business contacts if they so desire. This may also allow users to minimize the amount of information about their network that stored on the cloud. By decentralizing the storage of personal information (e.g., by keeping it on user devices only and off the cloud), it will be much harder for security breaches to leak private information. In other embodiments, an advanced address book may only store and associate or link a user's business contacts with a user identification. For example, the advanced address book may cross-reference each user's contacts list with publicly available information, and if a contact's information is not identified as a business, the advance address book may skip the storage of the contact and move on to analyzing the next contact. If the contact's information is identified as a business, the advanced address book may extract the contact from the user's address book and associate it with the user's identification on a central server.

Algorithms according to embodiments of the invention may also use these categorizations to perform searches within different address books, even if a central server does not have complete information (such as exact identity) about contacts. For example, the server may receive a search query from one user about finding a dentist. While the server may not store the exact address book of each of the user's personal contacts, it may know that one of the user's personal contacts include dentists. The server may request the dentist contact from the user's personal contact, instead of searching through each address book of each of the user's personal contacts, which may be inefficient and invasive. Different users may further have different privacy preferences, and may decide to store different kinds of information on the cloud. Embodiments of the invention may be able to search through networks and provide relevant information even if information from users is not always consistent or complete.

As used herein, a contact may be any entity with a phone number, email address, or other identification that allows someone to communicate with the contact (e.g., a website that provides customers a forum to contact a business, a screen name for a chat client). The contact may be a business or a person, or both. In general, a contact may be associated with a user by having associated information (e.g., contact identification, or contact information) in their address book, contact list, or friends list, for example. The contacts list or address book may be stored in a mobile device or on a server, or both. When used herein, contact may also be used to refer to information, such as a telephone number of e-mail address, associated with the person or business which is the contact.

Embodiments may use contacts (e.g., the information associated or linked with the contact) in a user's address book, which may be stored on the user's mobile device, to recommend or suggest businesses that the user may be interested in buying goods or services from, such as clothing stores, tailoring services, medical services (e.g., a cardiologist or eye doctor or dentist), salons, plumbers, cleaning services, restaurants, or other businesses. The system may determine which businesses that a user's contacts are also patronizing by determining for example which business telephone numbers are also stored in a contact's address book. For example, if a user is looking for a plumber, the system may determine or find a plumber that is popular or recommended within the user's network by determining whether the plumber's contact information is also stored in one or more address books belonging to one or more of the user's contacts or friends or followers in the user's social network. When referred to herein, a user's network may include or be represented by all contacts listed in a user's address book on a user's mobile device, but a user's network may include other contacts, such as those linked to a user via social media. Businesses may be ranked or rated based on the popularity of the plumber (e.g., how often the plumber appears) within a user's network. For example, businesses may have a higher rank for a user if their contact information or phone number is stored a higher number address books belonging to the user's contacts. The system may further allow users to recommend businesses to other contacts that are stored in users' address books or to other people within a user's social media network, such as recommending businesses to Facebook friends.

Embodiments of the invention may provide a mobile application, or app, on a user's mobile device. The mobile application may store and manage some or all of a user's contacts on the user's mobile device. In some embodiments, the mobile application may only store and manage a user's business contacts from the user's address book. The user may have an account and password with the app (e.g., stored by the app), and some or all of the user's contacts (whether contacts in the address book or in the user's social network or other network) may also have an account and password with the app. The app may also be connected to or associated with a web version or website, e.g., based on a server, and a user's networked address book may be accessible on the web through a desktop or other computer, for example. While most embodiments here may refer to a mobile device, e.g., a smart phone, tablet, laptop, netbook, or any computing device that is portable, embodiments may also include or be executed on computing devices which are not portable. While an "app" or application is discussed herein as an example embodiment, in other embodiments the functionality as disclosed herein may be carried out by modules in other forms.

Businesses may also have accounts with the app or website and may be able to learn when a user has recommended them to another user. Businesses may also be able to determine who their most loyal customers are and may be able to reward them with deals, discounts, or promotions. Businesses may further control what kinds of information about their offered goods and services may be provided to users of the app or website and whether the contact information for the business may be shared among different users of the app or website. Embodiments of the system may provide a new form of analytics for businesses to understand how consumers engage with their products or services and how a business brand may proliferate through social networks.

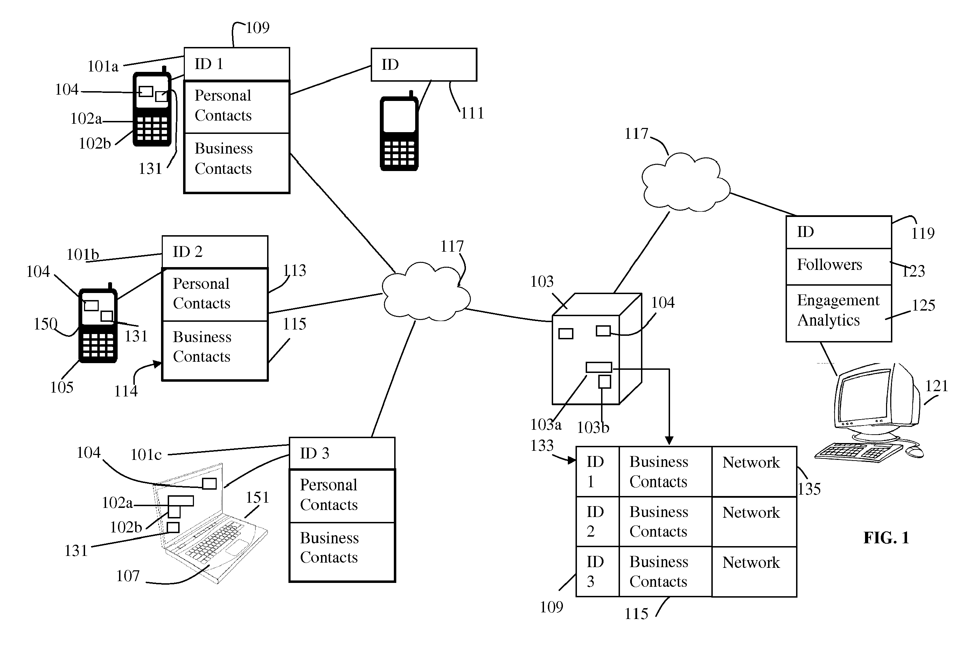

Fig. 1 is a diagram of a system or method for an enhanced address book and/or business recommendations, according to embodiments of the invention. Users 101a, 101b, and 101c may have or be associated with an account with a mobile application 104 which may be stored on a central server 103 and on mobile devices. Mobile application 104 may include a networked address book as described herein. Server 103 may be accessed through a computer network or cloud service such as the Internet, cellular telephone or data networks, and/or the World Wide Web (collectively 117). Users 101a, 101b, and 101c may access the mobile application 104 through mobile devices such as a smart phone 105 or a laptop computer 107, for example. Smart phone 105 and laptop computer 107 may each include memory 102a and a processor 102b. Server 103 may include memory 103a and processor 103b. Each user may be associated with an identification 109 (ID), such as a telephone number or username that each user may share with their contacts in ordered to be messaged or contacted. While in some embodiments any kind of identification may be possible, it may generally be best to use telephone numbers in order to use pre-existing contact information in user's address books and also since it is the main vehicle for identifying all kinds of contacts across most address books in existence. However, other types of identification ("ID") may be used. Telephone numbers may be easily implemented as ID for most applications of a networked address book, including categorizing contacts, tracking recommendations between users, recommending businesses and ranking results.

Each user may store, for example in memory 102a of their mobile device, a pre-existing address book or contacts list 114 of personal 113 and business 115 contacts (e.g., contact identifications), which may contain the contact identifications, ID's or telephone numbers of other users. The address book 114 may be native to the user's device, and the personal 113 and business 115 contacts may or may not be categorized or sorted as business contacts or personal contacts. A user may also store the ID 111 of contacts which are not users of the mobile application or business contacts who do not have an account with the mobile application. Mobile application 104, while typically providing a user interface on a mobile device (e.g. smartphone 105) may be for example executed by processors such as processor 102b and/or 103b. For example while the application is described in one embodiment as being "mobile", all or a portion of the functionality of mobile application 104 may be executed by server 103 and all or a portion by user mobile devices. Automating processes as discussed herein, e.g., having a processor on a server control various aspects of processes discussed herein, may increase user security and privacy, minimizing the risk that people (e.g. operators of a server) may view personal information.

Each smart phone 105 or other device used by each user may include output devices such as a display 150, and input controls 151, such as a touch screen or a keyboard and mouse, for example. Mobile application 104 may be displayed on display 150, and may receive search queries or other input from input controls 151. Output as describe herein may be provided in a number of ways, for example to display 150. Embodiments as described herein may output recommended business contacts, a list of contacts in a networked address book, or ranked search results to display 150 on smart phone 105, for example.

A business contact, identified for example by a business ID 119, may have an account on the mobile application (e.g., supported by server 103), accessible by the business through a desktop computer 121, for example, or another mobile device. Business 119 may provide any product or service to customers such as piano lessons, medical services, professional services, or customized wedding invitations, for example. Business 119 may have a phone number or ID that customers use to message or contact the business 119. The mobile application may allow the business 119 to view its "followers" 123 or the users that have included the business's 119 ID in their address books. Desktop computer 121 or other device may be also be connected to or have access to server 103 or a database 133 that associates or links each user's business contacts with their user ID. Computer 121 may further be configured to allow the business contact to offer promotions to the user identifications associated with the business contact.

The mobile application 104 may retrieve or gain access to the set or list of contacts in the address book 114 of each user. Mobile application 104 may cross-reference each of the contacts against publicly available information about businesses, or information stored on central server 103 to determine which of the contacts in users' address book 114 are business contacts. Mobile application 104 may store a separate list 131 of business contacts extracted from address book 114. The list or set of business contacts may be further categorized for example according to types of goods and services offered by the business contacts, information which may be provided by server 103, for example. In some embodiments, users may identify, select, or input some or all business contacts they wish to store with mobile application 104, and select or identify which of the business contacts are preferred or are favorites. The business contacts 115 stored with or identified by mobile application 104 may be stored and associated with a user ID 101b on server 103 (e.g., in memory 103a). For example, server 103 may store a table 133, database, or other data structure associating or linking each user's business contacts with their user ID. Server 103 may associate the table 133 with a user ID 101b for example by including the user ID in a header of the table 133 or in a separate column in the table 133 or other data structure. The user ID may be for example a unique key or reference number, or other data. In other embodiments, each user ID may refer to a user profile and the user profile may include a list or set of associated business contacts. Other methods of making the association may be used. Mobile application 104 may be stored on memory 102a and implemented on processor 102b, or implemented on different memory and processors.

Table 133 may associate or link each user ID 109 with one or more business contacts, based on the business contacts 115 extracted or determined by mobile application 104 (e.g., a column in table 133 may include user ID 109). Each user ID may also be associated with a network 135, which includes followers or friends on social media websites. The network may only include friends, followers, or connections of the associated user who also have accounts with a networked address book or mobile application 104. The connections may be based on a social media website, such as Twitter or Facebook, for example, or connections may be based on whether one user is in a native contacts list 114 of another user. To maintain privacy of the users, the network 135 associated with each user may be anonymized, for example by using the telephone number of each user's connections or other ID that may not include a contact's full name and address, or by another method. A native contacts list 114 may be a contacts list that is preinstalled or factory installed on a smart phone, and initially used for allowing users to make a phone call directly from the contacts list. While embodiments described herein may use contacts in the native contacts list 114 which pre-exist contacts in a networked address book, contacts added to native contacts list 114 after installation of a networked address book may still be considered part of the native contact list 114.

Users may search for a business or service through the mobile application 104 (as implemented by processor 102b, for example). For example, users 101b and 101c may include business 119 in their networked address book 131, e.g., business 119 may be associated with users 101b and 101c. Business 119 may be a hairstylist, for example. User 101b may store (e.g., in the app on their mobile device) another hairstylist contact that is different from business 119. User 101a may search for a hairstylist through the mobile application 104, e.g., by inputting a search query via input controls 151. Mobile application 104 may search for and retrieve businesses relevant to or matches the search query, e.g., hairstylists or salons, in all user accounts stored on server 103, or may search through contact lists of users stored on mobile devices in memory 102a, or may use data stored on both mobile devices and server 103. Mobile application 104 may retrieve results (e.g.., business contacts) from server 103 (or a database) for example through wireless communication between mobile devices 105 and server 103.

Businesses may be relevant to or matches the search query for example if they are in the same or similar category or subject matter described by the search query, or they are described by the query (which may include information other than the business category, e.g., region, name of business, etc.). Relevancy may also be based on whether words used in a business's name or description match or are similar to the words in the search query. An entity or business being relevant to the search query may also mean, for example that a search engine (e.g. the Google search engine) would return that entity or business in a list of results if given the query. If users 101a, 101b, and 101c are each in each other's contacts list 114 (e.g., ID information or other information for the users are in the list), they may all be deemed to be associated, friends, followers, or in each other's network 135. Alternatively, if user 101a is in the address book of user 101b but user 101b is not in the address book of user 101b, the two users may still be deemed to be associated, friends, followers, or in each other's network. Other ways of connecting or associating users may be possible, such as determining whether users are friends with each other on the Facebook network, connected on the LinkedIn network, or whether users reside in a similar or the same geographic area. Based on user 101a's search for a hairstylist, the server 103 or mobile application may determine that business 119 is top ranked hairstylist for user 101a, due to the business's 119 ID saved in both user 101b and user 101c's address book 114. User 101a may receive as a search result business 119, as well as business 119's association with users 101b and 101c. The other hairstylist saved by user 101b, may also be a search result, but may be ranked lower than business 119 for example. Other ranking criteria may be possible, such as public ratings, whether users 101b or 101c have shared the business 119 contact with other contacts, or whether users have marked the business with a thumbs up or thumbs down (or other indication of a rating, praise, etc.), marked the business with a "like", or provided some other approval or rating, for example. A higher ranked business may be placed higher than a lower ranked business in a list of search results. A business may be higher ranked if it includes a greater number of "likes" from users, for example.

The app may also gather "sentiment" of or regarding a business from users. For example, users may neglect to delete phone numbers or contact ID's of businesses that they do not like, such as businesses that the user patronized but did not have a good experience with, or a user may happen to have contact information for a business never used. The app may, from time to time, prompt or ask users on whether they like or dislike businesses, based for example on a rating or a "thumbs up" or "thumbs down", for example. Other rating types may be used. In some embodiments, the mobile app may allow a user to "like" their favorite business within a category. For example, a user may be associated with four plumbers as their business contacts, but the user may select or choose one of the four plumbers as their favorite. The selected favorite plumber may have a higher rating or rank in search results. The sentiment rating or score received from the user may further verify whether a business contact that is popular within a network truly provides quality services (e.g., the rating may determine whether a business may have aggressively promoted itself among a network without providing quality or trusted goods). When users search for a business recommendation, for example, the user may see that a business contact is in the address books of five of the user's contacts, but the business may have only two "thumbs up" and three "thumbs down." When users search for a business recommendation, a recommendation may include such information (the business having a certain rating) without the users being able to view the details that went into the recommendation (e.g., a business contact is in the address books of X of the user's contacts, but the business has certain ratings). Users may or may not be presented with certain details, such as which of their contacts have certain businesses in their address books, and such details may in certain embodiments not be stored on a central server, due to privacy concerns; such may be the benefits of an automated process.

Processors 102b and/or processor 103b may each or together carry out embodiments of the present invention. For example, processors 102b and/or processor 103b may be configured to perform methods as described herein by being connected to memories (e.g., 102a and 103a) storing code or instructions which when executed by the processor(s) cause the processor(s) to carry out methods as described herein. Server 103, databases, or mobile devices 105 may be configured to implement embodiments described herein by including processors 102b or 103b and executing software.

Server 103 (or a database) may be configured (e.g., by executing software on processors and memory) to maintain a directory 137 of business contacts, based on the business contacts associated with each user ID, e.g., based on the business contacts in each user's networked address book. The directory 137 of business contacts may be further verified by public information about listed businesses, or verified by multiple users including the business contact in their native contacts list or networked address book. Directory 137 of business contacts may include information on each business's name, address, phone number, e-mail, other contact information, services provided or a category describing a type of business (e.g., nail salon, yoga studio). For example, if two users add a business contact to their networked address book and the two entries include similar or the same information (e.g., the same name of the business and phone number but different address), server 103 may, based on the fact that the business contact is associated with two users, add the business name and phone number to the directory 137. Server 103 may further verify the business contact's address based on known or public information since the address conflicts between the two users. The directory 137 may allow syncing among all the users' networked address books. For example, a business may change its own contact information and directory 137 may be updated with the new contact information. Devices having the old contact information may receive an update on the new contact information. When new users sign up for the networked address book and search for a business, they may receive the new business's contact information (if it is relevant to the search and is associated with other users). The users' native contacts lists 114 may be further synced, with the directory 137 of businesses, or with the networked address book.

Syncing between the directory 137 and users' native contacts lists 114 may include for example any process where the version of a business contact in a directory 137 is made to be the same as the version that is listed in native contacts lists 114. Syncing may occur where the version listed in director 137 is the dominant version that replaces other versions in the native contacts lists 114. Syncing may further involve determining whether two business contacts, one listed in the directory 137 and one listed in the native contacts list 114, refer to the same individual or entity, even if each business contact uses a slightly different name or number or other information, or for example uses the same name but a different phone number or other information. Other criteria may be used to determine whether a business contact in directory 137 should be synced with a version of a business contact in a native contacts list 114.

When a user initially signs into, or uses for the first time, the mobile application, the user may have the option to share the user's contacts with the mobile application or transfer the user's contacts to the mobile application. (As discussed above, "contact" may mean the actual person or business, or the identification associated with that person or business.) The user may share or transfer all contacts or only business contacts, or certain selected contacts (e.g., in an "opt in" process) for example. The app may ask the user to share only the contacts identified as business/professional service contacts. The user may designate privacy settings in the app's preferences, or the app may alert the user every time information will be shared with the app or publicly. The app may execute a search on the user's contacts and determine whether the contact's ID is a person or a business, or is likely to be a person or business. The mobile application may cross-reference the ID with publicly available information, such as information found on search engines, public business websites, or business review sites, such as Yelp, or other types of public directories, to determine if the contact is a business. For example, if the contact is found in a public search along with information indicating the contact is a business (e.g., the contact's existence on Yelp or "Angie's List" may indicate it is a business; the contact's association on the Internet with terms such as "plumber", "dentist" or other business-related terms may also indicate it is a business).

The publicly available information may be accessible for example through the Internet 117. If a phone number or ID is a business (e.g., it is publicly available and is described as selling a good or service), the user's contact may be labeled or sorted as a business contact 115. If the phone number or ID is not publicly available, the contact may be labeled as a personal contact 113. Other information about business contacts may be gathered or determined through the publicly available information, such as the type, location, hours, or expensiveness of a business. The user may be asked to confirm, or "opt-in", that the user is in fact a business, or that the user wants to share the contact, before the contact is considered by the app (or server 103) to be a business to be used as a contact. When the app cross-references a user's pre-existing contacts, the app may automatically update business contacts having incomplete or incorrect information. For example, a user may include a business contact's name and phone number, but an incomplete, informal, or incorrect address or other contact information. The app may, based on publicly available information, update, in the user's address or contact book, the business contact to include the correct address.

Cross-referencing business contact information may also occur as new business contacts are added to a user's address book. In some embodiments, when a user adds a contact, the app, or the central server in conjunction with the app, may automatically search for the contact (e.g., on publically accessible Internet based records, or on a database internal to the server) to determine whether the contact is publicly connected to a business. If so, the app may automatically designate the contact as a business and the business type, and may further add other pertinent information. The app may further prompt the user, asking whether the user wishes to share the contact related to the business with all of the user's contacts, some of the user's contacts, or only share the contact anonymously (e.g., the connection with the user will not identify the user). Business contact information may further be updated in users' address books periodically if a business changes its publicly available contact information.

Cross-referencing may also occur across user's address books. For example, a group of users may include the same contact, and that contact may be a user of the application, for example. Another user may add the same contact as the group of users, but the contact information may be added incorrectly. The application may automatically cross reference the contact with the contact in the address books of the group of users to determine that the user incorrectly added the contact information. The application may further correct that information through a prompt to the user or automatically correcting it. If a user updates their information with a new telephone number for example, that user's contact information may automatically update in other user's address books. A business owner may also update its own information. Cross-referencing and updating of contact information may occur at other times as well.

Different levels of sharing may be possible within the mobile application. A user may choose to share all contacts with the mobile application and with all the user's contacts. A user may also choose to share only business contacts with the user's contacts and keep personal contacts private. A user may further choose to share business contacts with the user's personal contacts, but may choose to keep the association anonymous. For example, a sensitive business contact may be urologist, for example. If a user searches for a urologist, the user's contacts may not wish to make the association with a urologist known. The user may see urologist recommendations and a number of contacts that include the urologist in their address books, but may not see the specific contacts seeing the urologist. A user may also choose not to share any contact information with the user's network, but may be able to search through the mobile application based on information shared by the user's contacts with the user. Other levels and configurations of sharing may be possible.

Embodiments of the invention may further allow users to directly share business contacts with other users for example through the mobile application. In the application, each business contact may include an option to share the business with another user in the address book, as well as the user's opinions or a reason for recommendations. When sharing the business contact with another user, the user may select whether the sharing is public or semi-public, anonymized or private. For example a completely public share may mean that the share is published on a news feed. A semi-public share may mean that the business is notified about who shared its contact and which contact the business was shared with, but other contacts in the address book may be unaware of the share. An anonymous share may mean that the business knows its contact was shared, but unaware of the identities of the users.

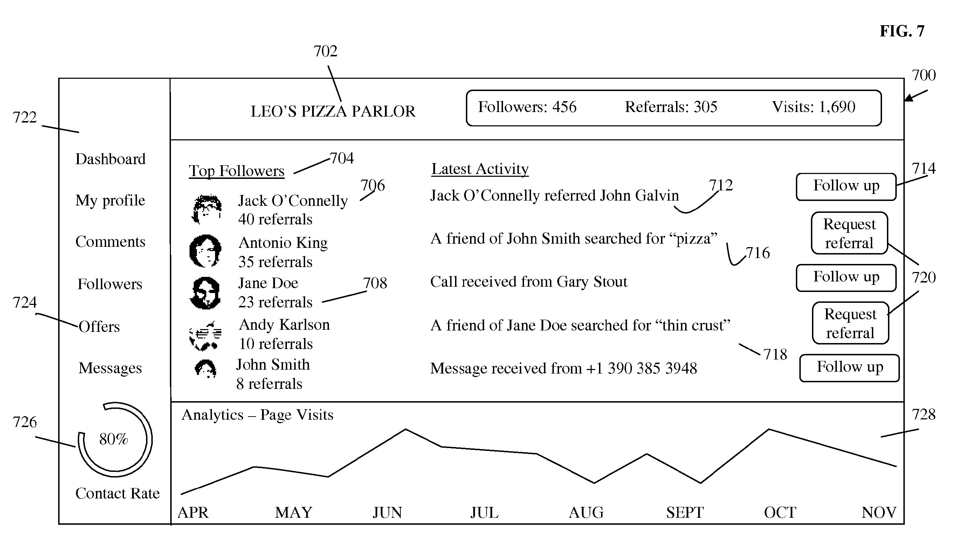

Business 119, as a user of the mobile application 104, may also receive information such as engagement analytics 125 from server 103. The analytics may be in the form of a web dashboard or business portal, for example (see, e.g., business portal 700 in Fig. 7). Analytics 125 may include metrics such as number of referrers (e.g., users who have shared the business 119 contact ID with others), a sentiment measurement (e.g., whether users view the business positively through postings on social media), a rating by a user, the number of messages or calls received from users on the app, or the most loyal users. The analytics may allow businesses to determine which users may be deemed "evangelizers" or "influencers" and the business may decide to reward those users or incentivize them to share or promote the business further. The application may allow businesses to monitor communications about the business between users and the amount of sharing is occurring. The business may further monitor whether users are contacting the business through the application and the amount of calls received. Through computer 121, for example, the business may offer promotions to users and receive recommendations on other users to contact based on analyzed data from the networked address book, e.g., network information based on contacts lists associated with the plurality users.

Each of mobile devices or computer systems 105, 107, 121 and server 103 may include components such as processors or controllers 102b and 103b, memories 102a and 103a such as long term or short term storage (e.g., hard disk drive, removable memory, random access memory etc.). Computer systems may include input/output (I/O) devices such as monitors, keyboards, pointing devices (e.g., mouse, etc.), or touch screens.

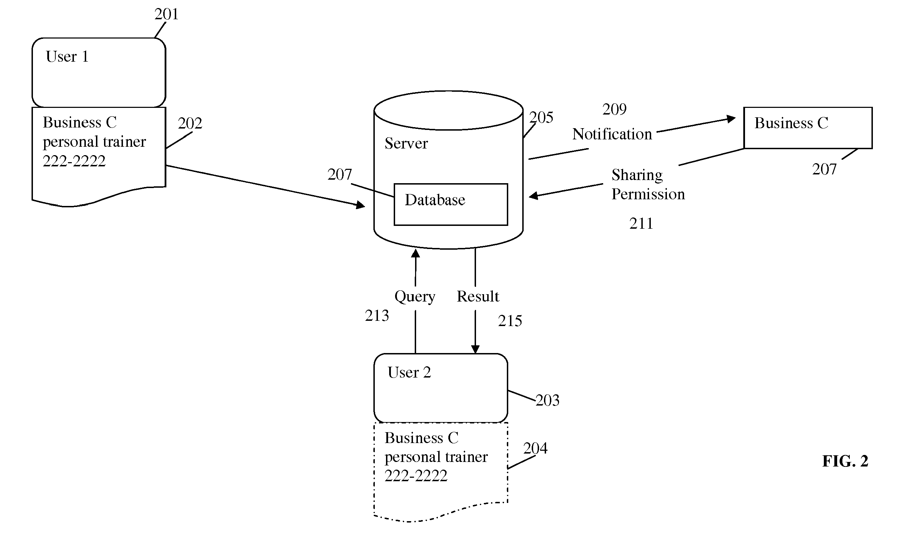

Fig. 2 is a flow diagram of a system for a networked address book, according to embodiments of the invention. A first user 201 and second user 203 may each have a mobile device with a networked address book, for example. Each of the mobile devices (not shown) may be in communication with a server 205 which stores a database 207. In other embodiments, a standalone database may be configured to store user identifications for first user 201 and second user 203, and each of the mobile devices 207 may be able to directly communicate with database 207 (e.g., without routing through a server). Server 205 or database 207 may be located in a different geographical location than mobile devices in communication with it (e.g., the server and database may be remote).A first user 201 may be able to manually categorize a business contact 202 as a personal trainer, for example, shown as Business C 207. The first user 201 may further select business contact 202 as a preferred contact in first user's networked address book. By selecting business contact 202 as a preferred contact, first user 201 may be associated with business contact 202. Database 207 may be configured to store a directory of business contacts which includes Business C 207. Business C 207 may have a business account with the networked address service. The server 205 or other central system may transmit a notification 209 or message to Business C 207, explaining that the first user 201 has categorized them as "personal trainer" within their networked address book. The notification 209 may ask Business C 207 if they would like to be discoverable by other users or stay private within the favorites list of users who already have the business's information. Business C 207 may send its sharing permission 211 to central server 205. For example, Business C 207 may allow itself to be discoverable by other users. A second user may send a search query 213 to the server 205 (e.g., via a mobile application on a mobile device). The search query 213 may request a personal trainer, for example. Since Business C 207 allowed itself to be discovered, second user 203 may receive or retrieve a relevant result 215 including Business C's contact identification, e.g. its name, phone number, and category indicating a personal trainer. Relevancy may be determined by the type of business or other known methods in the art. Relevancy may also be based on whether words or concepts used in a business's name, description, or category match or are similar to the words in the search query. A business directory may be referenced to determine relevancy, by determining similarity of a business's category to the words in search query 213. Second user 203 may store Business C as a business contact in its networked address book or native contacts list or both, for example. If Business C 207 did not allow itself to be discovered according to its sharing permission 211, the result 215 to second user 203's search query 213 may be a different personal trainer and may not include Business C's contact identification.

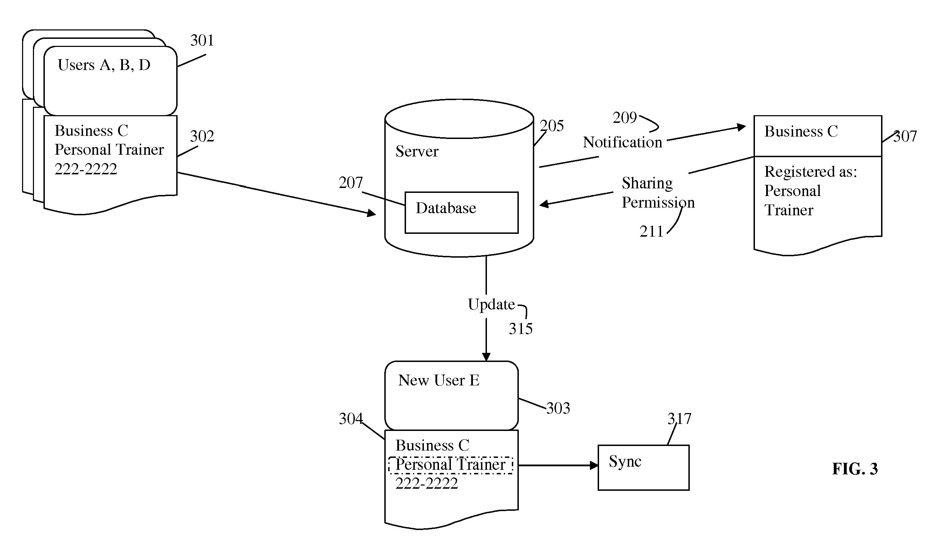

Fig. 3 is a flow diagram for syncing a networked address book with a native contacts list, according to embodiments of the invention. A system for providing a networked address book may include a plurality of users 301, such as Users A, B, and D, as shown. Each of the users 301 may be associated with a business contact ID 302 for Business C 307, for example. The association may have occurred through user selection of Business C 307 from each user's native contacts list on their respective mobile device. In some embodiments, a mobile application may extract or identify Business C from a user's native contacts list by cross-referencing known or public information, or referencing a stored directory of businesses (e.g., stored in database 207). Since User A, B, and D 301 identified Business C 307 as a personal trainer, the business directory may categorize Business C 307 as a personal trainer. New User E 303 may be a new user to a networked address book. New User E 303 may be associated with Business C's identification 304, because Business C may have been listed in New User E's 303 native contacts list with just a name and number, for example. Even if Business C 307 does not allow discoverability based on its sharing permission 211 sent to central server 205, the server 205 may be able to transmit an update 315 to New User E to appropriately categorize Business C's contact identification as a personal trainer in the networked address book. In step 317, Business C's contact identification may be further synced with New User E's native contacts list.

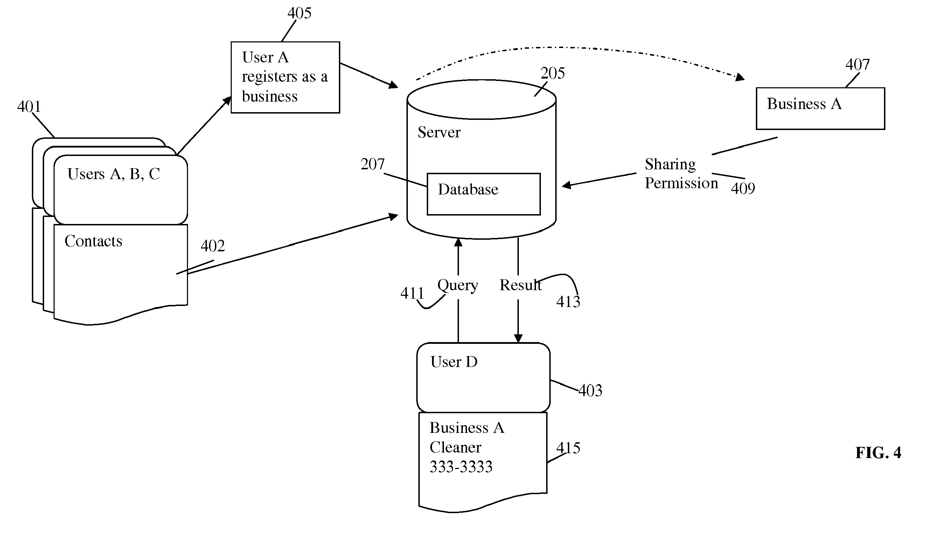

Fig. 4 is a flow diagram of a user signing up as a business, according to embodiments of the invention. A networked address book system may include a plurality of users 401, such as Users A, B, and C, and User D 403. Each of the users 401 may have a networked address book and may be associated with a plurality of contact identifications 402. Each of the associated contact identifications 402 may only include other users who also have an account with the networked address book. For example. Users A, B, and C may each have each other in their networked address books (e.g., User A is associated with User B and C's contact identifications, and User B is associated with User A and User C's contact identifications). In step 405, User A may decide to become a business and register as a business with server 205. User A may become Business A 407 and may transmit its sharing permission 409 or discovery preferences. Business A 407 may further designate itself as a Cleaner, for example, and Business A may be listed in a directory of businesses stored in, e.g., database 207 or other memory. Users B and C may be automatically associated with Business A, since Users B and C had already included Business A's contact information in their associated contact identifications 402. User D 403 may input a search query regarding a cleaning business into a mobile device and transmit it to server 205. Based on the search query, User D may receive Business A's contact identification 415 as a result 413 relevant to the search query and associated with Users A, B, and C. User D may also receive other results containing businesses that match or are relevant to cleaning services. If User D was further associated with User B and User C, e.g., User B and User C belong to User D's network, then Business A may be a highly ranked result. Other users searching for cleaning services may also receive results including Business A.

A user interface for users may provide a way to classify contacts and business, share contacts privately, publicly, or semi-publicly, and search for relevant and recommended businesses within a user's network (e.g., among all or some of the user's contacts in the user's address book). A relevant business may be related to a user's search query, for example, or match a particular category searched for by the user.

According to embodiments of the invention, the app's data may be stored in different ways, e.g., different combinations of user data, business data, and address book data may be stored on users' mobile devices and on the mobile application's server, depending on privacy requirements or preferences. For example, in one embodiment, all user data and address books may be stored on a server or cloud service, with each individual user's address book stored on their respective mobile device. If a user only wishes to share business contacts, for example, the server may only store the user's business contacts, while the user's personal contacts may be stored only on the user's mobile device. Further, any user data stored on the server may be anonymized or separated from a user's true identity, such as their full name or birth name. User data stored on the server may be referenced with a key or hash that is also stored on the user's mobile device, for example. If a user performs a search for businesses on the application, the application may, via the server, look up the user's data with a hash stored on the mobile device and cross referencing it with a database that is connected to the server. The user's contacts may also be referenced with a key or hash. The key or hash may be a phone number, screen name, or, for added security, a randomized code that is difficult to guess.

In other embodiments, no user data may be stored on the server, and the server may request from a first user that data be shared each time a second user associated with the first user requests business recommendations. For example, if user A searches for an orthodontist, user A's mobile device may request that the server query the mobile devices of other users in user A for an orthodontist. The server finds the data regarding orthodontists, but may not, in some embodiments, transmit the source of the data (e.g., in whose address books the orthodontists are found), to user A. In this way, if user B, in user A's network, has an orthodontist in his contact list, that specific knowledge may never be known by other contacts in user B's network. Or, the server may record a sharing event between users for a particular business, but may not store the fact that either user has saved the business contact. In other embodiments, only the type of businesses stored in a user's address book is stored on the server. Other configurations may be possible.

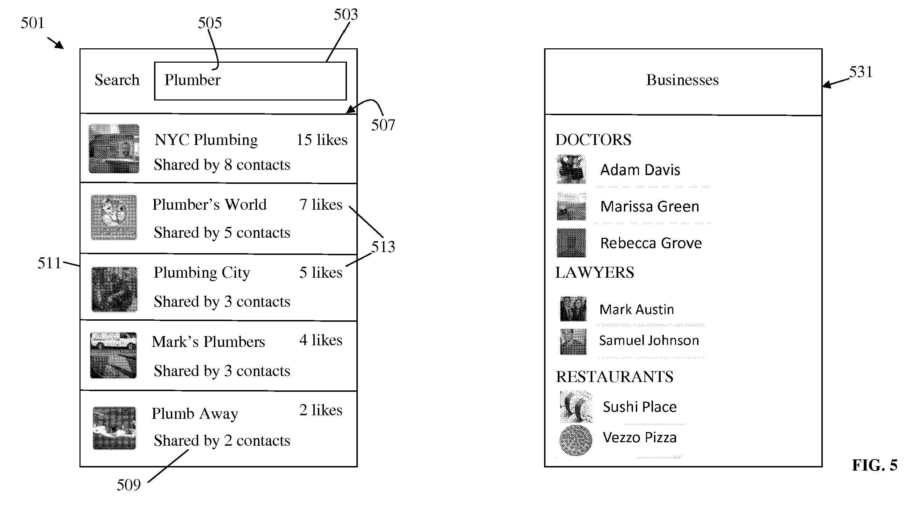

Fig. 5 is a diagram of user interfaces for a networked address book, according to embodiments of the invention. One user interface 501 for searching businesses may include a text box 503 for inputting a search query 505, for example. As shown, a search query 505 input by a user looking for a business recommendation may be for a plumber. One or more results or answers 507 relevant to the search query and in a list or set of contact identifications associated with another user may be populated. For example, the results as shown may be in a category labeled "plumber" in a business directory (e.g., directory 137). Since the category matches the search query 305, the results may be deemed relevant. Each of the results 507 may also indicate for example that it is "shared by X contacts" 509, or in a list or set of contact identifications associated with X number of other contacts. For example, a user searching for plumbers may see the business named "NYC Plumbing" as indicating that it is "shared by 8 contacts" or in a list or set of contact identifications associated with 8 other contacts or other users who are also in the searching user's list of contact identifications. These 8 other users may be users of the networked address book (e.g., they may have an account with the networked address book), and they may further be in the searching user's native contacts list (e.g., contacts list 114 in Fig. 1).

In other embodiments, the 8 other users may not necessarily be in the searching user's native contacts list but be connected to the searching user via a social media network, such as the Facebook network. The results 507 may also indicate how many users in a community "like" or otherwise approve of the business (e.g., number of likes 513). For "Plumbing City" 511, for example, 5 users have liked or favorite the business. The 5 users may be in the searching user's network (e.g., connected to the searching user via a social media network or in a contacts list associated with the searching user), or may be other users of the networked address book. The results 507 may be ranked or sorted based on the number of likes 513 (or other approval or rating) a business has and/or the number of contacts that include the business in their associated list of contact identifications, or both. A result 507 may be ranked higher because it has a greater number of likes and has a stronger connection to a searching user (e.g., more users within a network include the business in an associated list of contact identifications). In some embodiments, ranking of results may depend on community recommendations, where recommendations across all users for a type of business may be considered. The recommendations across all users may include users that are in a searching user's network or users that are not within a searching user's network. For example, the number of "likes" a business has 513 may be considered a metric of community recommendations. When users receive search results or answers 507 relevant to a search query 505, users may be able to see both kinds of metrics, for example, the number of "friends" or associated users that also have the business in their contacts list (e.g., shared by X contacts 509) and the amount or number of other users within the user community that also recommend the business (e.g., "likes" 513). One or more of these metrics may be used to rank or sort the retrieved business relevant to the search query 505. In alternate embodiments, ratings or indications of praise other than likes, thumbs up/down, recommendations, etc. may be used.

The ranking of business contacts retrieved from a server, database, or directory of businesses, based on a search query, may depend on a ranking algorithm that considers a measure of affinity or "distance" between each user and a business contact. This distance or affinity may depend on, for example, usage history of the user (e.g., how often a user contacts a business), the user's profiles, or other actions performed (such as "likes" or referrals of a business). In general, users may list or "like" their favorite businesses or service providers for quick access, which may indicate a high level of affinity between the user and the business (e.g., a short distance). For each search query provided by a user, each relevant business contact identification that is retrieved from the business directory may be scored according to for example the following formula (as with the other formulas provided herein, which are examples, other formulas may be used):

$$S_{ij} = N_{ij}D_{ij}R_{ij} \qquad\qquad (Eq.\ 1)$$

where Nij may be a function of a network distance between the user and business (e.g., if the business is in the favorites list of the user, then Nif may have a high value, or if the business is in the list or set of someone who is in the contacts list of the user, then Nij may have a moderate value); Dij may be a function of physical distance between the user and the business and the type of service searched for (e.g., if a user in Los Angeles searched for a gardener, a gardener in New York would have a low value for Dij); and Rij may be a score of relevancy of the search query to the services provided by the business.

The above algorithm may be adaptable based on user behavior. For example, the algorithm or score may have a feedback loop internal to the Distance function Dij in order to adapt to the real preferences of each user. The general shape of the function may be an S-function but may change its steepness and cutoff based on the user's history. If, for example, the user prefers businesses in a close geographical area among the search results shown to the user, the distance function may be more strict and have a shorter cutoff. The network function N may also have a feedback loop to identify the preferences of the user. For example, every time a user selects a search result to view in more detail, the edge between the use and the business may be assigned a high score as part of an input to N. In other words, if a user shows, through its actions, that they prefer businesses who are in the list or set of their first level contacts (e.g., businesses associated with the user's contacts list), the edge between the user and the business contact may "shorten" or have a higher score. Conversely, if a user never looks at businesses that are associated with other contacts in the user's contacts list, the edge value may decrease.

Algorithms may also be used to recommend businesses without user action and predict the desires of users or grow the user's list of favorites. Each user, business, and search query may be represented by a vector of parameters, and the correlation between any two users or between any user and any business may be represented by an inner product between any two vectors. A user profile $p_i$ may be represented by the following function, based on the Rocchio Algorithm:

$$\bar{p}_i = \frac{\alpha}{|\Phi_S|} \sum_{\bar{r}_n \in \Phi_S} \bar{r}_n + \frac{\beta}{|\Phi_C|} \sum_{\bar{r}_n \in \Phi_C} \bar{r}_n + \gamma \bar{r}_p$$

(Eq. 2)

where ΦS may be the set of all the search queries the user has performed in the past, ΦC may be the set of all of the connections the user has, and rp may be the parameterization of the user themselves (e.g., a user's LinkedIn profile can describe a user's profession), and $\alpha$, $\beta$, and $\gamma$ may be weights given to each of these functions as applied to the user.

For a given set of weights, search history, and parameterization of the user themselves, and the $p_i$ of the user's contacts, a profile $p_i$ may be determined for the user. The correlation between each user pi and business sj may be described by the following:

$$C_{ij} = \sum_i \bar{p}_i \bar{s}_j$$

(Eq. 3)

The correlation may determine the "distance between any user and every other business based on the history of the user, the user's profile characteristics, and profile characteristics of the user's contacts. For example, a lawyer may have many lawyers in a contacts list but may be in the middle of renovating a house, which may cause their search history to lean towards contractors or construction workers. The recommendation algorithm may set the $\alpha$ parameter so that search history has a greater weight than the user's own profile parameterization (the $\gamma$ parameter). Accordingly, the weights in the user's vector equation may determine how the algorithm will "lean".

Referring back to Fig. 5, another user interface 531 may be for a categorized list or set of businesses in a user's associated list or set of contact identifications. As described previously, a networked address book may automatically identify contacts in a user's native contacts list which are business contacts. The business contacts may be identified for example by referencing known information on businesses, from a stored database or directory (e.g., directory 137) or from public information on the web, or by other methods. Alternatively or additionally, a user may select business contacts from the user's native contacts list to be shared on a networked address book. The selected or identified business contacts 533 may be sorted or separated according to a category or type of business. The user may consult the networked address book to determine which business contact should be used for a specific business type. Other methods of identifying or marking businesses may be used. In some embodiments, a user interface may include other functions that help a user manage its business contacts. For example, a user may be able see (e.g., have displayed to the user) a summary of business referrals they made, and allow users to schedule appointments with different businesses. Different reminders may be based on the type of business meeting needed, such as differentiating between reminders/tasks related to a user's dentist or reminders/tasks related to a user's personal trainer. Other functions may be used with different embodiments.

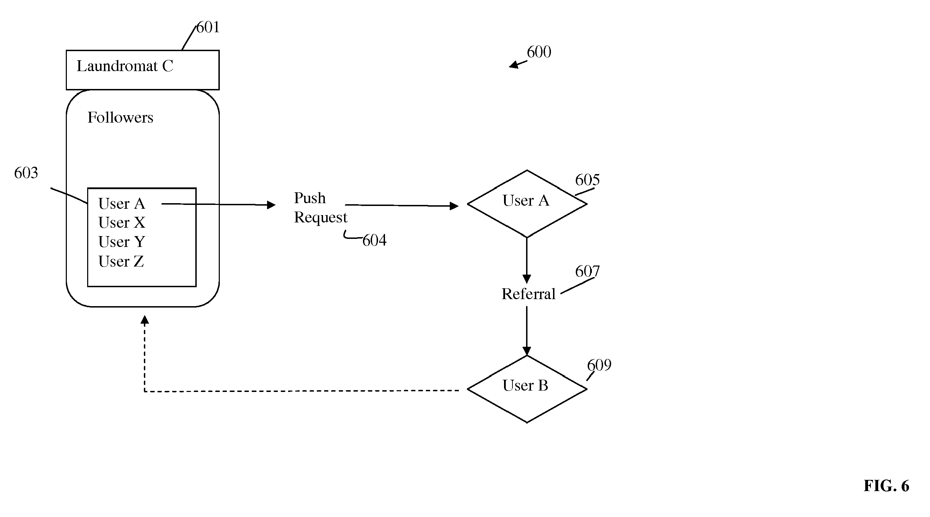

Fig. 6 is a flow diagram 600 of a social business referral, according to embodiments of the invention. A business using a networked address book may acquire new customers based on the social connections of the business's customers. A business, e.g., Laundromat C 601, may have an account with a networked address book, and may identify itself as a business. Laundromat C 601 may have one or more followers 603, or users who have selected Laundromat C as a favorite or patronized business (e.g., by including Laundromat C in a user's "likes"). Laundromat C 601 may send a push request 604 to one of its followers, such as User A 605, to request that User A 605 recommend Laundromat C 601 to other users in the User A's network. A push request 604 may be a request sent to a server, which then routes the request to a user's mobile device. The mobile device may then display a pop-up notification for the user. User A's network may include users in a list or set of contact identifications associated with User A (e.g., in User A's networked address book or in User A's native contacts list), users in User A's social networks, or users in User A's geographical vicinity. User A 605 may accept the push request 604 and send a referral 607 to User B 609, one of the users in User A's network. If User A 605 declines the push request 604, no referrals may be sent. The referral 607 may be a message recommending Laundromat C 601, or may be an invitation for User B 609 to "like" or follow Laundromat C 601. User B may subsequently decide to follow Laundromat C 601. While push requests may generally be sent to any of Laundromat C's users, Laundromat C 601 may prefer to target push requests to one of its followers based on a user's search queries. For example, a server may store users' search queries, and inform Laundromat C 601 that users connected to some of its followers were searching for laundry services. These users searching for laundry services and connected to some of its followers may have user identifications that are not yet associated with Laundromat C's 601 business contact. Users who accept push requests, such as User A 605, may receive coupons, credits, or other benefits from Laundromat C 601.

Fig. 7 is an example of a user interface for a business portal 700, according to embodiments of the invention. Each business contact, identified by a business ID 702, for example, may be associated with a device that is in communication with a database (e.g., database 207 of Figs. 2-4) storing a networked address book, or a plurality of user identifications associated with other user identifications and business contacts identifications. The business portal 700 may be a user interface that gathers and analyzes data based on the networked address book and users' activity. For example, the business portal 700 may list 'Top Followers' 704 of the business, shown as Leo's Pizza Parlor. The 'Top Followers' 704 may include users 706 of the networked address book who have referred the greatest number of other users to Leo's Pizza Parlor. The users 706 may be ranked by the number of referrals 708 they have sent, for example. Business portal 700 may also include a news feed 710 of notable events or user actions within the networked address book. For example, the business may receive a notification every time one of their followers referred another user 712 to become a follower of Leo's Pizza Parlor. A button 714 may be available to allow (e.g., if a user clicks on the button) the owner of Leo's Pizza Parlor to follow up and send a message to the referral. In another example, the business may receive a notification on search queries of other users besides users associated with the business (e.g., users that are not followers). The search query may be related to the business, such as a search query for the same of business or a query on products or services that the business provides. As shown for Leo's Pizza Parlor, a notification may be sent on a search query that is related to it, such as a search query for 'pizza' 716 or 'thin crust' 718, products that Leo's Pizza Parlor may offer. The search query may be received from a user identification that is not associated with the business contact, e.g., the user may be outside of the direct network of Leo's Pizza Parlor. The notification may indicate that a user is associated with one of its followers (e.g., John Smith or Jane Doe as shown) and searched for related products. Buttons may be available to allow the business contact to request a referral to the user via a user that is associated with the business contact (e.g., by sending a push notification to a follower, according to the steps described by Fig. 6). Other buttons or menu items 722 may allow the business to offer 724 promotions to the user identifications associated with the business contact.

Business portal 700 may include other types of analytical information based on user activity on the networked address book. For example, a contact rate 726 may indicate how many of its followers have referred the business. Other analytics 728 may include page visits over time. Other types of data may be provided by the business portal 700, based on the data stored with database 207, for example.

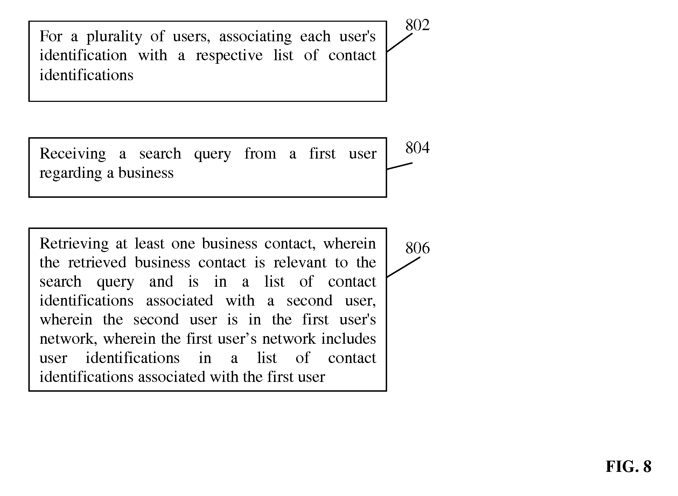

Fig. 8 is a flowchart of a method, according to embodiments of the invention. A system or method for providing a networked address book may include a server with processor and memory in communication with a plurality of mobile devices, for example. A plurality of users may use each of the plurality of mobile devices. In operation 802, for the plurality of users, a processor may associate each user's identification with a respective list of contact identifications. The associated list of contact identifications may be identified or selected by users or a server as business contacts. The selected business contacts may be extracted from each user's native contacts list, for example. In operation 804, a processor may receive a search query from a first user regarding a business. The first user may seek from the networked address book recommendations for businesses from other users that are part of the first user's native contacts list, for example. In operation 806, a processor may retrieve at least one business contact, where the retrieved business contact is relevant to the search query and is in a list of contact identifications associated with a second user. The second user may be in the first user's network, which may include user identifications in a list of contact identifications associated with the first user. The first user's network may further include other users that connected to the first user via social media network or by being in a close geographical location, for example.

Embodiments of the invention may include an article such as a computer or processor readable non-transitory storage medium, such as for example a memory, a disk drive, or a USB flash memory device encoding, including or storing instructions, e.g., computer-executable instructions, which when executed by a processor or controller, cause the processor or controller to carry out methods disclosed herein. Some embodiments may include a combination of one or more general purpose processors and one or more dedicated processors such as DSPs (digital signal processors).

Thus, embodiments of the invention have been described with respect to what is presently believed to be the best mode with the understanding that these embodiments are capable of being modified and altered without departing from the teaching herein. Therefore, the invention should not be limited to the precise details set forth herein but should encompass the subject matter of the claims that follow and the equivalents of such modifications and changes as fall within the true spirit of the invention.

**Claims**

1.  A method for providing a networked address book, comprising:

for a plurality of users, associating, by a processor, each user's identification with a respective list of contact identifications;

receiving, by the processor, a search query from a first user of the plurality of users regarding a business; and retrieving, by the processor, at least one business contact, wherein the retrieved business contact is relevant to the search query and is in a list of contact identifications associated with a second user of the plurality of users, wherein the second user is in the first user's network, wherein the first user's network comprises user identifications in the list of contact identifications associated with the first user.

2. The method of claim 1, wherein the respective list of contact identifications includes contacts selected from the associated user's native contacts list.

3. The method of claim 2, wherein the selected contacts are selected by the associated user.

4. The method of claim 2, wherein the selected contacts are automatically determined by cross-referencing the associated user's native contacts list with known business contacts information.

5. The method of any of claims 1-4, comprising determining preferred business contacts of each user, wherein the retrieved business contact is based on the determined preferred business contacts.

6. The method of any of claims 1-5, comprising maintaining a directory of business contacts based on the list of contact identifications associated with each user.

7. The method of any of claims 1-6, wherein the second user is in the first user's network by being listed in the first user's native contacts list.

8. A system for a networked address book, comprising:

a memory to store a plurality of user identifications, each user identification associated with a list of contact identifications; and
one or more processors configured to:

receive a search query from a first user regarding a business; and
retrieve at least one business contact, wherein the business contact is relevant to the search query and is in a list of contact identifications associated with a second user, wherein the second user is in the first user's network, wherein the first user's network comprises user identifications in a list of contact identifications associated with the first user.

9. The system of claim 8, wherein the respective list of contact identifications includes contacts selected from the associated user's native contacts list.

10. The system of claim 8 or 9, wherein the user identifications and the contact identifications are telephone numbers.

11. The system of any of claims 8-10, wherein the memory is to store a directory of business contacts based on the list of contact identifications associated with each user.

12. A system, comprising:

a database configured to:

store a plurality of user identifications, each user identification associated with one or more business contact identifications; and
store a directory of business contacts based on the associated one or more identifications;

a plurality of mobile devices in communication with the database and each configured to:

receive a search query from a user of the mobile device; and
receive from the database, based on the received search query, a business contact identification from the directory of business contacts, wherein the business contact identification is associated with at least one user identification of the stored plurality of user identifications, and wherein the at least one user identification corresponds to a user belonging to the user's contacts.

**13.** The system of claim 12, wherein the received business contact identification is relevant to the received search query.

**14.** The system of claim 12 or 13, wherein each mobile device is configured to store a native contacts list and allow a user to select, from the native contacts list, one or more business contact identifications associated a user identification corresponding to the user.

**15.** The system of any of claims 12-14, comprising a device in communication with the database and configured to:

receive a notification of a search query related to a business contact, wherein the search query is from a user identification that is not associated with the business contact; and
request a referral to the user via a user that is associated with the business contact.

FIG. 1

FIG. 2

EP 2 958 065 A1

Users A, B, D _301_

Business C
Personal Trainer
222-2222 _302_

Server _205_

_207_ Database

_209_ Notification

Sharing
Permission
_211_

Business C _307_

Registered as:
Personal
Trainer

Update _315_

New User E _303_

_304_ Business C
Personal Trainer
222-2222

Sync _317_

**FIG. 3**

FIG. 4

EP 2 958 065 A1

EP 2 958 065 A1

501

505 503

| Search | Plumber | |
|---|---|---|

507

| | NYC Plumbing | 15 likes |
| | Shared by 8 contacts | |
| | Plumber's World | 7 likes |
| | Shared by 5 contacts | |
| | Plumbing City | 5 likes |
| | Shared by 3 contacts | |
| | Mark's Plumbers | 4 likes |
| | Shared by 3 contacts | |
| | Plumb Away | 2 likes |
| | Shared by 2 contacts | |

511

513

509

Businesses

531

DOCTORS

Adam Davis

Marissa Green

Rebecca Grove

LAWYERS

Mark Austin

Samuel Johnson

RESTAURANTS

Sushi Place

Vezzo Pizza

FIG. 5

EP 2 958 065 A1

```
                                            601

    ┌─────────────────────────┐
    │ Laundromat C            │
    ├─────────────────────────┤                      600
    │                         │
    │  Followers              │
    │                         │
    │   ┌──────────────┐      │          ┌─────────┐        605
    │   │ User A  ─────┼──────┼──────►   │ User A  │
603 │   │ User X       │      │  Push    └────┬────┘
    │   │ User Y       │      │  Request      │
    │   │ User Z       │      │    604        ▼            607
    │   └──────────────┘      │          Referral
    │                         │               │
    └─────────────────────────┘               ▼            609
                ▲                          ┌─────────┐
                └─ ─ ─ ─ ─ ─ ─ ─ ─ ─ ─ ─ ─│ User B  │
                                           └─────────┘
```

**FIG. 6**

FIG. 7

**LEO'S PIZZA PARLOR**

Followers: 456          Referrals: 305          Visits: 1,690

Dashboard

My profile

Comments

Followers

Offers

Messages

80%

Contact Rate

Top Followers

Jack O'Connelly
40 referrals

Antonio King
35 referrals

Jane Doe
23 referrals

Andy Karlson
10 referrals

John Smith
8 referrals

Latest Activity

Jack O'Connelly referred John Galvin

A friend of John Smith searched for "pizza"

Call received from Gary Stout

A friend of Jane Doe searched for "thin crust"

Message received from +1 390 385 3948

Follow up

Request referral

Follow up

Request referral

Follow up

Analytics – Page Visits

APR     MAY     JUN     JUL     AUG     SEPT     OCT     NOV

EP 2 958 065 A1

For a plurality of users, associating each user's identification with a respective list of contact identifications

802

Receiving a search query from a first user regarding a business

804

Retrieving at least one business contact, wherein the retrieved business contact is relevant to the search query and is in a list of contact identifications associated with a second user, wherein the second user is in the first user's network, wherein the first user's network includes user identifications in a list of contact identifications associated with the first user

806

FIG. 8

Europäisches
Patentamt

European
Patent Office

Office européen
des brevets

## EUROPEAN SEARCH REPORT

Application Number

EP 15 17 3039

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/124059 A1 (PRATT JAMES [US] ET AL) 17 May 2012 (2012-05-17) * the whole document * | 1-15 | INV. G06Q10/10 G06Q50/00 |
| X | EP 2 339 480 A1 (ALCATEL LUCENT [FR]) 29 June 2011 (2011-06-29) * the whole document * | 1-15 | |
| X | US 2012/158751 A1 (TSENG ERICK [US]) 21 June 2012 (2012-06-21) * the whole document * | 1-15 | |
| X | EP 2 081 358 A1 (RESEARCH IN MOTION LTD [CA]) 22 July 2009 (2009-07-22) * the whole document * | 1-15 | |
| X | WO 2011/011422 A2 (RESEARCH IN MOTION LTD [CA]; CHITTURI SURESH [US]; MCCOLGAN BRIAN EDWA) 27 January 2011 (2011-01-27) * the whole document * | 1-15 | |
| X | WO 2007/089415 A2 (SBC KNOWLEDGE VENTURES LP [US]) 9 August 2007 (2007-08-09) * the whole document * | 1-15 | TECHNICAL FIELDS SEARCHED (IPC) G06Q |

The present search report has been drawn up for all claims

| Place of search | Date of completion of the search | Examiner |
|---|---|---|
| The Hague | 13 October 2015 | Guenov, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 3039

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2015

| Patent document cited in search report | | Publication date | Patent family member(s) | | Publication date |
|---|---|---|---|---|---|
| US 2012124059 | A1 | 17-05-2012 | NONE | | |
| EP 2339480 | A1 | 29-06-2011 | NONE | | |
| US 2012158751 | A1 | 21-06-2012 | US 2012158751 A1 | | 21-06-2012 |
| | | | US 2015019483 A1 | | 15-01-2015 |
| EP 2081358 | A1 | 22-07-2009 | CA 2712544 A1 | | 23-07-2009 |
| | | | EP 2081358 A1 | | 22-07-2009 |
| | | | US 2009182821 A1 | | 16-07-2009 |
| | | | WO 2009091820 A2 | | 23-07-2009 |
| WO 2011011422 | A2 | 27-01-2011 | CA 2768805 A1 | | 27-01-2011 |
| | | | EP 2457172 A2 | | 30-05-2012 |
| | | | US 2011173223 A1 | | 14-07-2011 |
| | | | WO 2011011422 A2 | | 27-01-2011 |
| WO 2007089415 | A2 | 09-08-2007 | US 2007189503 A1 | | 16-08-2007 |
| | | | WO 2007089415 A2 | | 09-08-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 62014909 B